# EUROPEAN PATENT APPLICATION

(11) **EP 1 649 757 A1**
(43) Date of publication of application: **26.04.2006**
(21) Application number: 04425740.0
(22) Date of filing: 04.10.2004
(51) Int. Cl.: A23G 3/28, A23G 3/00, A21C 15/00

(54) **Machine for decorating food products**

(71) Applicant: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Cauda, Agostino, 12046 Monta d'alba (Cuneo) (IT); Massa, Luciano, 12042 Bra (Cuneo) (IT); Sobrero, Giovanni, 12050 Cerreto Langhe (Cuneo) (IT)
(74) Representative: Rambelli, Paolo

(57) **Abstract**

A machine (1) for decorating food products (P) in a production line includes a support frame (2,3) defining a transit area (20) through which the food products pass; a device (40) for dispensing a fluid decorating product into the transit area; a movable mask element (30) interposable between the dispenser device and the transit area (20) for the product (P) and having a plurality of apertures (31) for delimiting the areas in which the decorating fluid is to be deposited on the food product; and a cleaning device (60) for removing residual decorating fluid from the mask element as a result of relative movement of the mask element with respect to the cleaning device.

## Description

The present invention relates to a machine for decorating food products in a production line, and in particular to a machine operable to decorate an edible base advancing either continuously or by stages.

The object of the invention is to provide a machine of the aforesaid type which makes it possible to decorate in a continuous process, and whereby it is possible to predetermine and easily change the decorating pattern if necessary, according to the type of product.

This object is achieved with the characteristics claimed in Claim 1.

In such a machine the decorating pattern can be selected very simply by choosing a masking element with openings having the desired shape. In addition, it is not necessary to stop the production line in order to remove fluid material deposited on the masking element.

Further characteristics and advantages of the invention are constituted by the characteristics forming the object of Claims 2 to 9.

An additional object of the invention is to provide a method for decorating food products with a machine according to the invention.

Preferred, though not limitative embodiments of the invention will now be described with reference to the appended drawings, in which:
Figure 1 is a schematic front elevation view of a machine for decorating food products according to the present invention;
Figures 2 to 4 are schematic perspective views illustrating the operation of the machine of Figure 1; and
Figure 5 is a schematic perspective view illustrating the operation of a variant of the machine of Figure 1.

A machine for decorating food products according to the invention is generally indicated 1. This machine includes a lower portion 2, constituting the base or support frame of the machine, and an upper portion 3.

The lower portion 2 is operable to house a belt conveyor 10, or equivalent equipment, for transporting the product P to be decorated, from a processing station upstream of the decorating machine, and from the decorating machine to a station downstream in the production line. The path of travel is indicated in the drawings by the arrow M.

The support frame 2 therefore defines a transit area 20 of the product P, through which the product P passes in order to be processed by the machine of the invention.

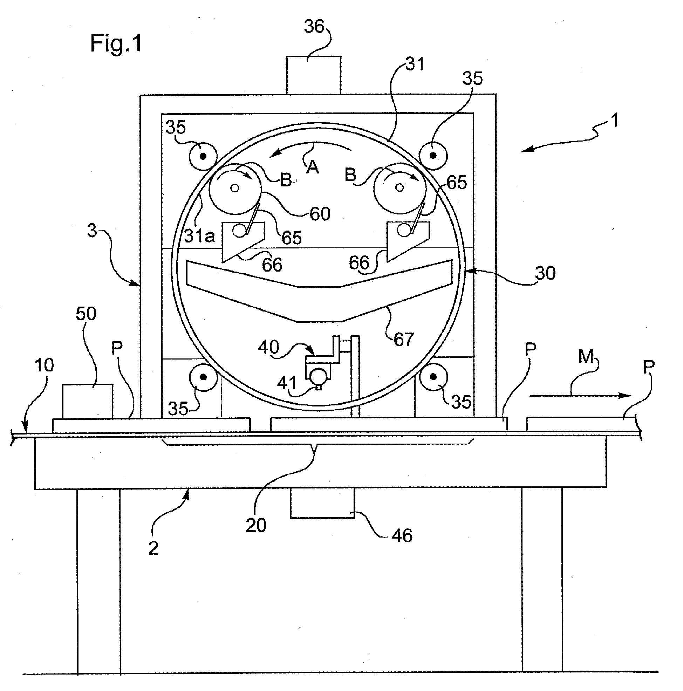

With reference to Figures 1 to 4, a drum 30 is mounted to the upper portion 3 of the machine, which drum is cylindrical in shape and rotatable about an axis of symmetry, indicated in the drawings by the arrow A. The lateral wall 31 of the drum 30 has a plurality of apertures 32, arranged in a predetermined pattern, in the form of a matrix, for example.

The drum 30 is rotated by means of rollers 35 arranged on the upper portion 3 of the machine, at least one of these being driven in a known manner by drive means 36. The drum 30 is positioned near the transit area 20 of the product, over the belt 10.

It is preferable if the drive means 36 are of a type in which the speed can be controlled, so that the angular velocity of the rotating drum can be synchronized with and/or adjusted according to the speed of advancement of the products to be decorated.

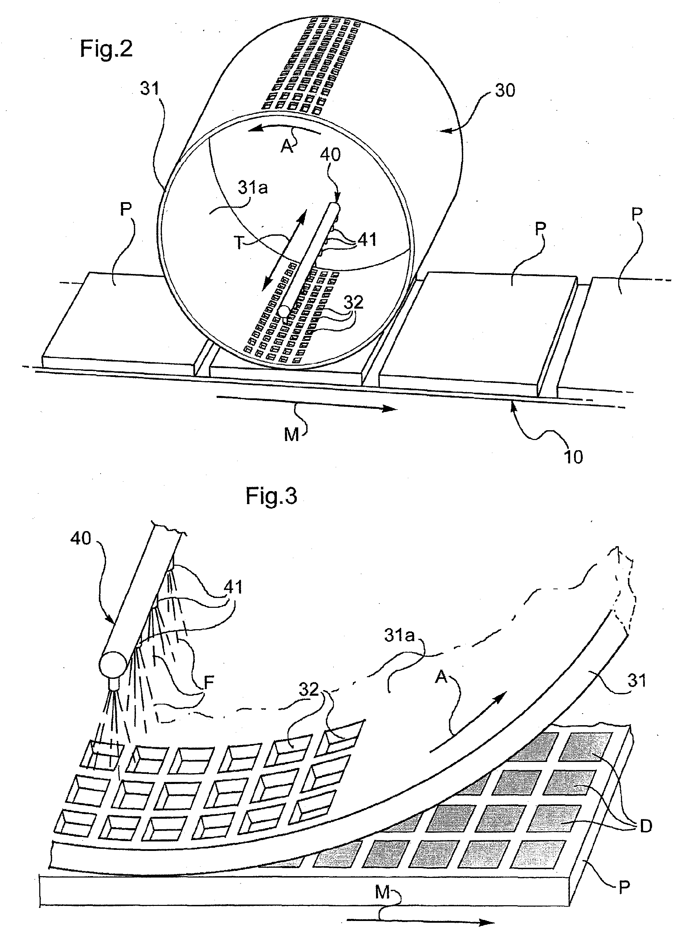

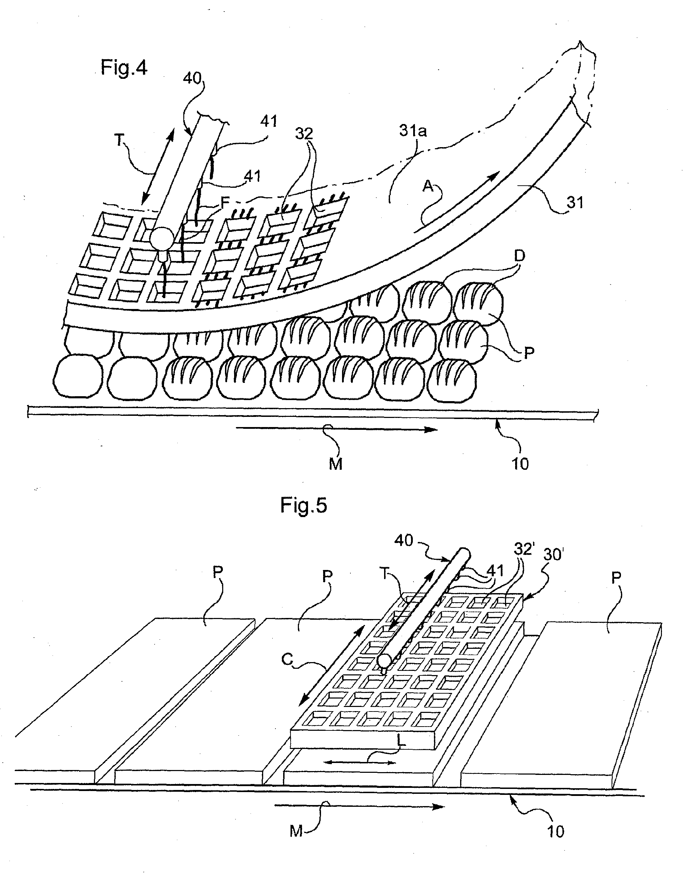

A dispenser device 40, with a plurality of nozzles 41, is arranged within the area defined by the drum 30, i.e. over the lower portion of the wall 31, that is the portion closest to the belt 10, for dispensing a decorating fluid F, for example liquid chocolate, into the transit area 20 of the product P. The lower portion of the wall 31 of the drum 30, interposed between the dispenser device 40 and the transit area 20, acts as a mask defining the areas D where the decorating fluid F is deposited on the products. In the embodiment illustrated in Figure 3, the nozzles 41 are of a spray type, which by spraying the decorating product F are each operable to create a sprayed area on the product P, illustrated in the drawings as a layer of bakery product, such as a slice of sponge cake. The decorating fluid may be liquid chocolate, for example, sprayed at a pressure of 1.5-2 bar. In the embodiment illustrated in Figure 4, the nozzles 41 are of a pouring type. In this variant the dispenser device 40, controlled by a motor 46, is operable to oscillate transversely, along the arrow T, making it possible to decorate the product P, here constituted by chocolates, in a zigzag pattern. It is clear that also in this example the effect of the apertures 32 is to delimit the area on which the decorating fluid can be deposited.

In general, the rotary movement of the drum 30 interposes successive portions of the wall 31 thereof between the dispenser device 40 and the transit area 20 of the product P. This avoids dripping decorating fluid on the tray in which the product P is usually arranged. In the example of Figure 3, the drum 30 rotates substantially in contact with the product P, while in the example of Figure 4 the drum 30 is spaced from the product.

In order to synchronize the rotation of the drum 30 with the advancement of the belt 10, and thus of the product P, an encoder 50 is arranged at the entrance to the transit area 20.

Scraper rollers 60 are also arranged in the upper portion 2 of the machine, positioned so that their lateral surface is in contact with the radially inner surface 31a of the wall 31 of the drum 30. These rollers 60 are rotatable in the opposite sense to that of the drum 30. The lateral surface of these rollers 60 is covered in rubber, preferably of a Shore hardness of 40-80, in order to scrape fluid or solidified residual product F from the surface 31a of the drum 30 and collect it, as the rollers 60 rotate against the drum 30.

Scraper devices 65 are provided to remove in turn the residual product F from the surface of the scraper rollers 60. Chutes 66 are positioned under such devices 65 in order to collect the decorating product F and convey it by gravity to an end collector 67 arranged underneath, the collector having a screw conveyor (not shown) for transporting the residual product from the machine, along a path transverse the direction of advance M of the belt 10. In this way decorating material dropped on the surface of the drum 30 can be recovered.

It is also preferable if blower devices (not shown) are provided outside the drum 30 for blowing pressurized hot air, at 4-5 bar for example. These devices are operable to blow hot air onto the radially outer surface of the drum 30 so as to keep it at a temperature which prevents residual decorating product F from solidifying. These blower devices are also able to clean any deposits of decorating product from the lateral surfaces of the apertures 32 in the drum 30, which cannot be reached by the scraper rollers 60.

Figure 5 shows a variant of the decorating machine according to the invention including, instead of the rotatable drum 30, a flat movable sheet 30', having apertures 32' for defining the areas on which the decorating product is to be deposited on the food product P. This sheet is movable in a plane parallel to the path of travel of the belt 10, in a longitudinal direction L and a transverse direction C, thereby making it possible to utilize all the apertures 32', in the sheet 30' and also to move the sheet 30' way from the transit area 20 in order to clean the sheet 30' with appropriate scraper devices (not shown).

It is intended that the embodiments described here should be seen as non-limitative examples of the invention; the shape and disposition of parts, as well as constructional and functional details thereof can be modified to provide numerous variants which will appear suitable to those skilled in the art.

The machine of the invention is suited in particular to decorating bakery goods, such as a portion of sponge cake or the like, or products such as chocolates, possibly arranged in a support, according to a predetermined decorating pattern.

## Claims

1. A machine (1) for decorating food products (P) in a production line, **characterised in that** it includes
a support frame (2, 3) defining a transit area (20) for the food product (P) to pass through;
means (40) for dispensing a fluid decorating product (F) into the said product transit area;
a movable mask element (30; 30') interposable between the said dispenser means and the said food product transit area and having a plurality of apertures (32; 32') to delimit areas (D) for deposition of the fluid decorating product (F) on the said food product; and
cleaning means (60) operable to remove residual fluid decorating product from the said mask element as a result of relative movement of the said mask element with respect to the said cleaning means.

2. A machine according to Claim 1, in which the said mask element is constituted by a substantially cylindrical rotatable member (30), with the said apertures formed in a lateral wall (31) thereof, the said rotatable member being able to interpose successive portions of the said wall between the said dispenser means and the said product transit area.

3. A machine according to Claim 2, in which the said cleaning means are scraper devices (60) having a scraping surface in contact with a surface (31a) of the said rotatable member.

4. A machine according to Claim 3, in which the said scraper devices are rollers rotatable in the opposite sense to that of the said rotatable member.

5. A machine according to Claim 3 or Claim 4, which further includes means (66, 67) for collecting the decorating product removed by the said scraper means.

6. A machine according to any of Claims 3 to 5, also including heating means, operable to maintain the said rotatable member at a temperature warm enough to prevent the said residual decorating product from solidifying.

7. A machine according to Claim 6, in which the said heating means are devices for blowing hot air.

8. A machine according to any preceding Claim, in which the said dispenser means are of a spray type.

9. A machine according to any Claim from 1 to 7, in which the said dispenser means are of a pouring type.

10. A method for decorating food products using a machine according to any Claim from 1 to 9.
